# EUROPEAN PATENT APPLICATION

(11) **EP 2 620 901 A1**
(43) Date of publication of application: **31.07.2013**
(21) Application number: 13152754.1
(22) Date of filing: 25.01.2013
(51) Int. Cl.: G06Q 10/06

(54) **Associative memory-based project management system**

(30) Priority: 26.01.2012 US 201213359217
(71) Applicant: The Boeing Company, Chicago, IL 60606-2016 (US)
(72) Inventor: Quadracci, Leonard Jon, Seattle, WA Washington 98126 (US)
(74) Representative: Howson, Richard G.B.

(57) **Abstract**

A method and apparatus for managing information (116) for projects (106) is provided. Information (116) for the projects (106) is stored as data entities (120) in an associative memory (130). The associative memory (130) includes a plurality of data having a plurality of associations in which the data entities (120) are included in the plurality of data. The associative memory (130) further includes a content-addressable structure. The associative memory (130) is configured to be queried based on at least one relationship selected from a group that includes direct relationships and indirect relationships among the plurality of data. The data entities (120) stored in the associative memory (130) are grouped to form a number of clusters (134). A report is generated using the number of clusters (134).

## Description

### BACKGROUND

The present disclosure relates to managing complex or large projects using an associative memory.

Project management is an art as old as civilization itself. For example, ancient Egyptians managed the project of building the pyramids at Giza. However, the techniques of project management have been studied and refined in modern times in order to increase the efficiency of projects in terms of cost, time, and possibly other parameters.

For example, one business project management strategy developed in 1986 is known as SIX SIGMA®. One of several possible goals of the SIX SIGMA® project management strategy is to institute a manufacturing process which produces less than 3.4 defects per million product units manufactured. However, SIX SIGMA® is only one example of a business management or project management strategy.

Many such strategies exist, and software exists for aiding project management. Further, many different types of projects exist. One type of project may be manufacturing a large number of production units, or perhaps manufacturing a smaller number of very complex production units, such as aircraft. Other types of projects may include establishing a company, conducting research and development, establishing a space program, such as a program to send a manned mission to the planet Mars, and many other different types of projects. Thus, project management techniques may be applied to many different types of projects, and many different project management techniques exist. Yet further, multiple effective project management techniques may exist for each type of project.

As mentioned above, research and development (R&D) may be one type of project to which project management techniques might be applied. Research and development may refer to work directed towards developing different types of technologies. Different types of organizations may undertake different types of research and development projects. These different types of organizations may include, but are not limited to, governmental organizations, non-governmental organizations, international organizations, military organizations, companies, corporations, independent contractors, charities, nonprofit organizations, partnerships, hybrid organizations, and other suitable types of organizations. A hybrid organization may be an organization that operates in both the public sector and private sector.

An organization, such as a private company, may undertake different types of research and development projects. In some cases, a company may undertake hundreds to thousands of research and development projects over many years. As one illustrative example, a company may have multiple departments within the company. Each department within the company may be responsible for work on tens to hundreds of research and development projects. Additionally, in some cases, more than one department within the company may be responsible for tasks for the same research and development project.

As the number of research and development projects undertaken by a company increases, the difficulty of managing these research and development projects also may increase. Further, managing the information for these different research and development projects may become increasingly difficult as the number of research and development projects increases. Information for a research and development project may include, for example, but is not limited to, a list of tasks associated with the research and development project, an identification of a research and development project manager, a list of employees involved with the research and development project, a list of deliverables, a list of deadlines, a list of research and development project milestones, funding information, expense information, research logs, and/or other suitable types of information.

In some cases, information for the research and development projects in a company may be stored in a number of different locations and/or in a number of different formats. As the number of research and development projects increases, managing information that is stored in different locations and/or in different formats may become increasingly difficult and more time-consuming. Therefore, it would be desirable to have a method and apparatus that takes into account at least some of the issues discussed above as well as possibly other issues.

### SUMMARY

In one illustrative embodiment, a method for managing information for projects is provided. Information for the projects may be stored as data entities in an associative memory. The associative memory may include a plurality of data having a plurality of associations in which the data entities are included in the plurality of data. The associative memory further may include a content-addressable structure. The associative memory may be configured to be queried based on at least one relationship selected from a group that includes direct relationships and indirect relationships among the plurality of data. The data entities stored in the associative memory may be grouped to form a number of clusters. A report may be generated using the number of clusters.

In another illustrative embodiment, an apparatus for managing information for projects may comprise a project manager and a project analyzer. The project manager may be configured to store the information for the projects as data entities in an associative memory. The associative memory may include a plurality of data having a plurality of associations in which the data entities are included in the plurality of data. The associative memory further may include a content-addressable structure. The associative memory may be configured to be queried based on at least one relationship selected from a group that includes direct relationships and indirect relationships among the plurality of data. The project analyzer may be configured to group the data entities stored in the associative memory to form a number of clusters. The project analyzer may be further configured to generate a report using the number of clusters.

In yet another illustrative embodiment, a computer system may comprise a bus, a non-transitory storage device connected to the bus, and a processor unit connected to the bus. The non-transitory storage device may include program code. The processor unit may be configured to execute the program code to store information for projects as data entities in an associative memory. The processor unit may be further configured to group the data entities in the associative memory to form a number of clusters. The processor unit may be further configured to generate a report using the number of clusters. The associative memory may include a plurality of data having a plurality of associations. The data entities may be included in the plurality of data. The associative memory further may include a content-addressable structure. The associative memory may be configured to be queried based on at least one relationship selected from a group that includes direct relationships and indirect relationships among the plurality of data.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives, and features thereof will best be understood by reference to the following detailed description of an illustrative embodiment of the present disclosure when read in conjunction with the accompanying drawings, wherein:
**Figure 1** is an illustration of a project management environment in the form of a block diagram in accordance with an illustrative embodiment;
**Figure 2** is an illustration of an associative memory in the form of a block diagram in accordance with an illustrative embodiment;
**Figure 3** is an illustration of a data entity stored in an associative memory in the form of a block diagram in accordance with an illustrative embodiment;
**Figure 4** is an illustration of an operational flow in the form of a block diagram in accordance with an illustrative embodiment;
**Figure 5** is an illustration of a process for managing information for projects in the form of a flowchart in accordance with an illustrative embodiment;
**Figure 6** is an illustration of a process for forming clusters of data entities in the form of a flowchart in accordance with an illustrative embodiment;
**Figure 7** is an illustration of a process for generating a report in the form of a flowchart in accordance with an illustrative embodiment;
**Figure 8** is an illustration of a process for determining how much is being spent on projects related to an area of interest in the form of a flowchart in accordance with an illustrative embodiment;
**Figure 9** is an illustration of pseudocode for creating and loading an associative memory in accordance with an illustrative embodiment;
**Figure 10** is an illustration of pseudocode for forming clusters in accordance with an illustrative embodiment; and
**Figure 11** is an illustration of a data processing system in accordance with an illustrative embodiment.

### DETAILED DESCRIPTION

The different illustrative embodiments recognize and take into account different considerations. For example, the different illustrative embodiments recognize and take into account that some currently available systems for managing projects may include performing manual analysis of the information for these projects. Manual analysis may be an analysis that is performed by a human operator, even if performed with the assistance of a computer. This type of analysis may require more time, effort, cost, and resources than desired.

Further, the different illustrative embodiments recognize and take into account that manual analysis may require a human operator with a certain level of experience or expertise. The amount of time, expense, and/or training needed for a human operator to gain this level of experience or expertise may be greater than desired.

The different illustrative embodiments also recognize and take into account that information for projects may be stored in different storage devices, in different locations, and in different formats. Tracking related information across multiple projects may be more difficult than desired when the information is stored in different storage devices, in different locations, and in different formats.

Additionally, the different illustrative embodiments also recognize and take into account that some currently available systems for identifying related projects among a plurality of projects may be unable to process substantially all of the information for the projects. For example, some currently available systems may select only certain pieces of information for a particular project for processing based on pre-defined characteristics.

The different illustrative embodiments also recognize and take into account that this type of reductive processing may cause relationships between pieces of information for different projects to be missed. For example, information that may be important for identifying that two projects are related may be excluded from processing when this information does not fit within the pre-defined characteristics.

The different illustrative embodiments recognize and take into account that having a system for grouping projects that are related without needing to reduce the amount of information for these projects during processing may be desirable. The different illustrative embodiments recognize and take into account that associative memory technology may allow vast amounts of information for projects to be collected and processed. Further, the different illustrative embodiments recognize and take into account that using an entity analytics engine with an associative memory may allow related projects and related information between projects to be grouped more accurately and quickly as compared to some currently available systems.

Thus, the different illustrative embodiments may provide a method and apparatus for managing information for projects. In particular, the different illustrative embodiments may provide a method and apparatus for managing information for projects stored in an associative memory. The illustrative embodiments also may be used in project management itself.

The illustrative embodiments described herein may be applied to research and development projects. However, the illustrative embodiments are not limited to research and development projects, and may be applied to many different types of projects. Thus, while the illustrative embodiments specifically may describe using an associative memory in the context of managing research and development projects, these descriptions are exemplary only and not limiting of the claimed inventions.

In one illustrative embodiment, a method may be provided for managing information for projects. The information for the projects may be stored as data entities in an associative memory. The associative memory may include a plurality of data having a plurality of associations in which the data entities are included in the plurality of data. Further, the associative memory may include a content-addressable structure. The associative memory may be configured to be queried based on at least one relationship selected from a group that includes direct relationships and indirect relationships among the plurality of data. The data entities stored in the associative memory may be grouped using a number of selected criteria to form a number of clusters. A report may be generated using the number of clusters.

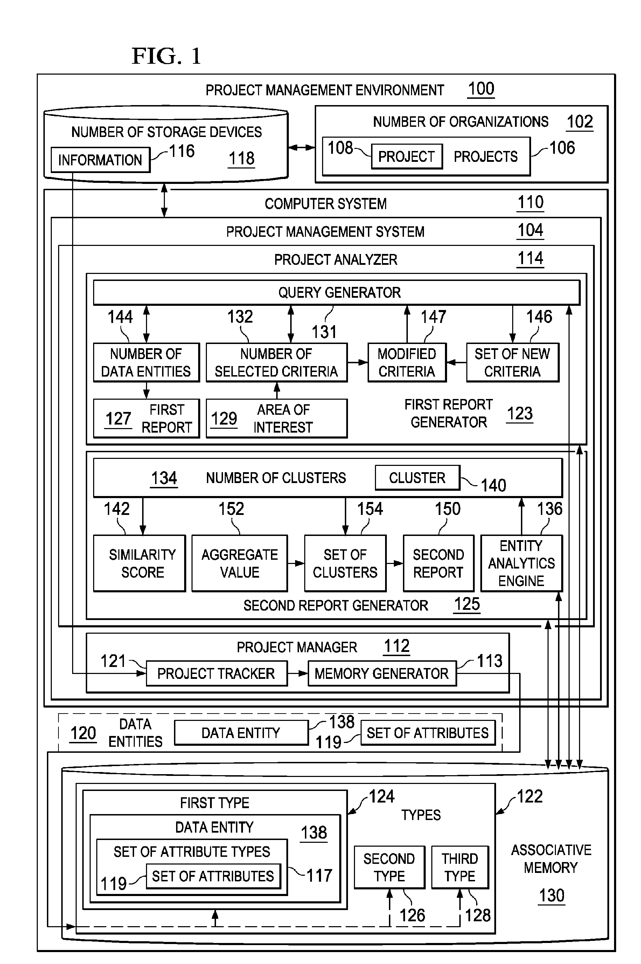

With reference now to the figures, **Figure 1** is an illustration of a project management environment in the form of a block diagram depicted in accordance with an illustrative embodiment. Project management environment **100** may include number of organizations **102** and project management system **104.** Project management system **104** may be configured to manage projects **106** undertaken by number of organizations **102.**

As used herein, a "number of" items may mean one or more items. For example, a number of organizations means one or more organizations. Further, as used herein, an "organization" may refer to any type of social group which distributes tasks for a collective goal. An organization may take a number of different forms. For example, without limitation, an organization in number of organizations **102** may be selected from one of a governmental organization, a non-governmental organization, an international organization, a military organization, a company, a corporation, an independent contractor, a charity, a nonprofit organization, a partnership, a hybrid organization, or some other suitable type of organization. Any given organization may be part of a larger organization, such as a department within a multi-department corporation.

In these illustrative examples, number of organizations **102** may undertake projects **106.** As used herein, a "project" may be a planned collaborative effort involving research, design, and/or development that is directed towards achieving a particular aim. As used herein, the term "project" is not limited to this definition, and may include any goal of human endeavor involving work and time. Project **108** may be an example of one of projects **106.**

As one illustrative example, project **108** may be the manufacturing of an aircraft having a new design. As another example, project **108** may be the inspection of a mechanical system. Project **108** also may be the development of a new spacecraft. In yet another example, project **108** may be the development of a reconnaissance and surveillance mission algorithm.

Project management system **104** may be configured to manage projects **106.** Project management system **104** may be implemented using hardware, software, or a combination of the two. For example, project management system **104** may be implemented using one or more data processing systems. These data processing systems may be in a distributed or networked environment. In some cases, project management system **104** may be implemented using a group of remotely administered data processing systems known as a "cloud". Further, project management system **104** may be characterized as including one or more modules that may be separate or part of a monolithic architecture.

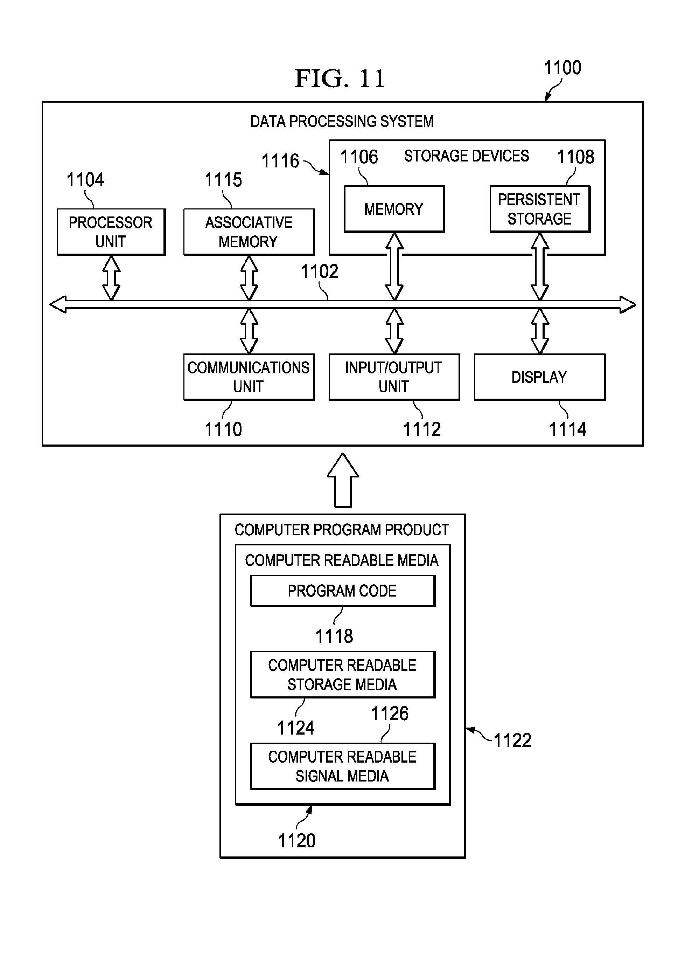

In these illustrative examples, project management system **104** may be implemented in computer system **110.** Computer system **110** may comprise a number of computers. When one or more computers are present in computer system **110,** these computers may be in communication with each other. In some illustrative examples, computer system **110** may be implemented using data processing system **1100** in **Figure 11****.**

As depicted, project management system **104** may include project manager **112** and project analyzer **114.** Project manager **112** may be configured to manage information **116** for projects **106.** Information **116** may include, for example, without limitation, tasks, deliverables, a number of people, funds, cost, a timeline, deadlines, equipment, materials, files, logs, reports, and/or other suitable information for projects **106.**

Information **116** may be stored in number of storage devices **118.** One or more of number of storage devices **118** may be located in number of organizations **102,** in a number of locations remote to number of organizations **102,** or in a combination of the two. A storage device in number of storage devices **118** may be selected from memory, a server, a storage unit, a database, a file, a flash drive, or some other suitable type of storage device.

Project manager **112** may be configured to retrieve information **116** from number of storage devices **118.** In one illustrative example, project manager **112** may use project tracker **121** to retrieve information **116** for projects **106.** Project tracker **121** may be implemented using any number of project tracking applications. In these illustrative examples, project tracker **121** may be configured to retrieve information **116** in the form of free text. Free text also may be referred to as free-form text or unstructured data.

Further, project manager **112** may use memory generator **113** to identify data entities **120** using information **116** in the form of free text. As used herein, a "data entity" may be an item of data for a project in projects **106.** A data entity may take a number of different forms. As one illustrative example, a data entity for project **108** may be a particular task to be performed for project **108.** As another example, a data entity for project **108** may be a particular product manufactured as part of project **108.**

Memory generator **113** may generate associative memory **130** using data entities **120.** As used herein, an "associative memory" may include a plurality of data and a plurality of associations among the plurality of data. The plurality of data and the plurality of associations in an associative memory may be stored in a non-transitory computer readable storage medium. As used herein, a "plurality of" items may mean two or more items. For example, a plurality of associations may mean two or more associations. In some cases, the plurality of data may include, for example, compressed data, encrypted data, or a combination of the two.

The plurality of data may be collected into associated units of data, such as a first associated unit of data, a second associated unit of data, and a third associated unit of data. More or fewer associated units of data may be present. An associated unit of data may be two or more sets of data that are associated with each other in some manner.

An associative memory may be configured to be queried based on indirect relationships among the plurality of data in addition to direct correlations among the plurality of data. An associative memory may also be configured to be queried based on direct relationships and combinations of direct and indirect relationships. An example of a direct relationship may be the relationship of two sets of data that form an associated unit of data. A direct relationship may also be a direct relationship between two associated units of data.

An indirect relationship may exist when a direct relationship does not exist but when data are indirectly connected. For example, an indirect relationship may exist between the first associated unit of data and the third associated unit of data when the first associated unit of data is directly related to the second associated unit of data and the second associated unit of data is directly related to the third associated unit of data. Many other examples of direct and indirect relationships may be possible.

Further, an associative memory may include a content-addressable structure. A content-addressable structure may provide the associative memory with the capability to be queried based on the content in the associative memory or the plurality of data itself, rather than on addresses associated with the data in the associative memory. In some cases, the content-addressable structure may allow the associative memory to map input patterns in the plurality of data to output patterns in the plurality of data.

In these illustrative examples, data entities **120** may form at least a portion of the plurality of data stored in associative memory **130.** As used herein, "at least a portion" may be some or all of associative memory **130.** Memory generator **113** may store data entities **120** in associative memory **130.** In particular, memory generator **113** may identify types **122** of data entities **120** and store data entities **120** by types **122.** As one illustrative example, for each data entity identified, memory generator **113** may determine the particular type for that data entity. Memory generator **113** may store the data entity in associative memory **130** in association with the data entities of the same particular type. When the particular type for the data entity is a new type, memory generator **113** may create a new list of data entities for the data entity of the new type.

Types **122** of data entities **120** may include, for example, but are not limited to, first type **124,** second type **126,** and third type **128.** Of course, depending on the implementation, types **122** of data entities **120** may include any number of types.

Additionally, for each data entity identified, memory generator **113** may identify a set of attributes for that data entity. As used herein, a "set of" items means zero or more items. For example, a set of attributes may be zero or more attributes. In this manner, a set of attributes may be a zero or null set. Further, an "attribute", as used herein, may be a specific feature or piece of information related to a data entity.

In one illustrative example, data entity **138** may be an example of one of data entities **120** identified by memory generator **113.** Memory generator **113** may then identify data entity **138** as being of first type **124** and may store data entity **138** in associative memory **130** as belonging to first type **124.** In this manner, data entity **138** may be stored in association with other data entities of first type **124.**

Further, memory generator **113** may identify set of attributes **119** for data entity **138.** Further, memory generator **113** may identify an attribute type for each of set of attributes **119.** In particular, memory generator **113** may identify set of attribute types **117** for set of attributes **119.** Memory generator **113** may store set of attributes **119** in association with data entity **138** according to set of attribute types **117.**

In some cases, two or more of data entities **120** may have attributes of the same attribute type. Further, in some cases, when a first data entity and a second data entity both have attributes of a same attribute type, one or more of the attributes for the first data entity may be the same as one or more of the attributes for the second data entity.

As one illustrative example, an attribute type may be selected from one of cost, an offset credit, government matching funds, a number of people on a project, a number of tasks for a project, a project deadline, a number of devices of a particular type being used in a project, a type of material, an identification number, or some other suitable attribute type. This list of possible attribute types for a data entity is not limiting of the claimed inventions, as the illustrative embodiments contemplate many possible attributes other than those listed above. An attribute of a particular attribute type may then be the value for that attribute type belonging to the corresponding data entity.

For example, data entity **138** may be a part for an aircraft. One of set of attributes **119** for data entity **138** may be plastic. Plastic may belong to an attribute type in set of attribute types **117** that is a type of material. Set of attributes **119** for data entity **138** may include any number of attributes for each of set of attribute types **117.**

In this manner, memory generator **113** may store information **116** for projects **106** in a manner that allows associations between same or similar pieces of information to be formed in associative memory **130.** The storing of data entities **120** in associative memory **130** may allow groups of related projects in projects **106** to be more easily and quickly identified as compared to grouping projects using currently available systems.

Project analyzer **114** may use associative memory **130** to analyze projects **106.** For example, project analyzer **114** may include first report generator **123** and second report generator **125.** In these illustrative examples, first report generator **123** may be configured to use associative memory **130** to generate first report **127** identifying information related to area of interest **129.** Area of interest **129** may be, for example, without limitation, a topic, a theme, a type of subject matter, a focus, or some other suitable type of area of interest with respect to projects **106.**

First report generator **123** may include query generator **131.** Query generator **131** may be configured to identify number of data entities **144** related to area of interest **129** using associative memory **130.** Number of data entities **144** may be referred to as a "cluster" in some cases.

In particular, query generator **131** may use number of selected criteria **132** to group any data entities in data entities **120** stored in associative memory **130** related to area of interest **129.** In other words, query generator **131** may use number of selected criteria **132** to group a portion of data entities **120** related to area of interest **129** into a cluster.

In these illustrative examples, number of selected criteria **132** may be initially received in user input. The user input may be received through, for example, a graphical user interface configured for display on a display system. In one illustrative example, the graphical user interface may allow a user to enter number of selected criteria **132** in the form of a query using the graphical user interface.

Number of selected criteria **132** may be a number of search terms. These search terms may include, for example, without limitation, a word, a string of words, a phrase, one or more keywords related to area of interest **129,** a word or phrase identifying area of interest **129,** an image, an audio file, a series of symbols and/or alphanumeric characters, and other suitable search terms by which data entities **120** stored in associative memory **130** may be searched.

Query generator **131** may use number of selected criteria **132** to identify number of data entities **144** related to area of interest **129.** Thereafter, query generator **131** may use number of data entities **144** to identify set of new criteria **146** that can be added to number of selected criteria **132.** Set of new criteria **146** may be identified based on the types of data entities within data entities **120,** the attributes associated with each of number of data entities **144,** and/or other suitable information. In some cases, a user may be able to view set of new criteria **146** and refine set of new criteria **146** by removing and/or modifying one or more criteria in set of new criteria **146.**

Query generator **131** may add set of new criteria **146** to number of selected criteria **132** to form modified criteria **147.** Query generator **131** may then use modified criteria **147** to identify number of data entities **144** related to area of interest **129.**

The process of identifying set of new criteria **146** using number of data entities **144,** forming modified criteria **147** using set of new criteria **146,** and then identifying number of data entities **144** using modified criteria **147** may be repeated until set of new criteria **146** is null and/or no longer contains search terms that are meaningful and/or similar. Depending on the implementation, this process may be halted by query generator **131** and/or a user.

When the final number of data entities **144** has been identified, first report generator **123** may generate first report **127** using number of data entities **144.** First report generator **123** may identify number of data entities **144** by type, each set of attributes **119** associated with each of number of data entities **144,** and/or other suitable information about number of data entities **144** in first report **127.**

In these illustrative examples, second report generator **125** may be configured to generate second report **150** identifying number of clusters **134** that includes data entities for projects in projects **106** that are related. These projects may be related in a number of different ways. For example, projects in a cluster may be related when the information for these projects is related in some manner. As another example, projects in a cluster may be related by being related to a particular area or subject of interest.

As one illustrative example, second report generator **125** may use entity analytics engine **136** to identify correlations between data entities **120** stored in associative memory **130.** Entity analytics engine **136** may compare data entities **120** to each other to identify correlations between data entities **120.** For example, for each data entity in data entities **120** stored in associative memory **130,** entity analytics engine **136** may determine whether that data entity belongs to a cluster in number of clusters **134.**

Data entity **138** may be an example of one of data entities **120.** Cluster **140** may be an example of one of number of clusters **134.** Entity analytics engine **136** may determine whether data entity **138** belongs to cluster **140** by comparing data entity **138** with a number of data entities already present in cluster **140.**

These comparisons may be made based on preselected criteria and/or criteria entered by a user. As one illustrative example, data entity **138** may be compared with the number of data entities already present in cluster **140** to determine whether data entity **138** shares one or more attributes with these other data entities in cluster **140.** In some cases, data entity **138** may be compared to the number of data entities in cluster **140** based on the attributes and/or other pieces of information in associative memory **130** that are associated with the number of data entities in cluster **140.**

In comparing data entity **138** with the number of data entities already present in cluster **140,** entity analytics engine **136** may generate similarity score **142** based on these comparisons. Entity analytics engine **136** may then determine whether similarity score **142** is greater than a selected threshold. If similarity score **142** is greater than the selected threshold, project manager **112** may add data entity **138** to cluster **140.**

In these illustrative examples, second report generator **125** may be configured to generate second report **150** using number of clusters **134** formed by project manager **112.** In one illustrative example, project analyzer **114** may be configured to generate second report **150** based on aggregate value **152** for each cluster in number of clusters **134.**

In one illustrative example, aggregate value **152** may be for a particular attribute type shared by the number of data entities in a cluster. For example, aggregate value **152** may be a sum of values for the attributes of a particular attribute type shared by the data entities in a cluster. As one illustrative example, aggregate value **152** may be a total number of data entities in the cluster. As another illustrative example, aggregate value **152** may be a sum of the cost of the projects in a cluster, or some other suitable type of value.

Second report generator **125** may add any cluster in number of clusters **134** having aggregate value **152** greater than a selected threshold to set of clusters **154** selected for generating second report **150.** This selected threshold may be selected such that a cluster having aggregate value **152** greater than the selected threshold may be identified as warranting further intention.

Second report generator **125** may then generate second report **150** using the data entities in set of clusters **154.** Second report **150** may be used to manage projects **106** undertaken by number of organizations **102.** Further, second report **150** may be used to identify a number of operations that may improve efficiency in completing projects **106.**

The illustration of a project management environment in **Figure 1** is not meant to imply physical or architectural limitations to the manner in which an illustrative embodiment may be implemented. Other components in addition to and/or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, in some cases, project analyzer **114** may be part of project manager **112.** Further, depending on the implementation, at least a portion of project manager **112** and/or project analyzer **114** may be implemented in associative memory **130.**

In some illustrative examples, data entities **120** may be stored in more than one associative memory. In these examples, project manager **112** may be configured to manage information **116** for projects **106** across these multiple associative memories.

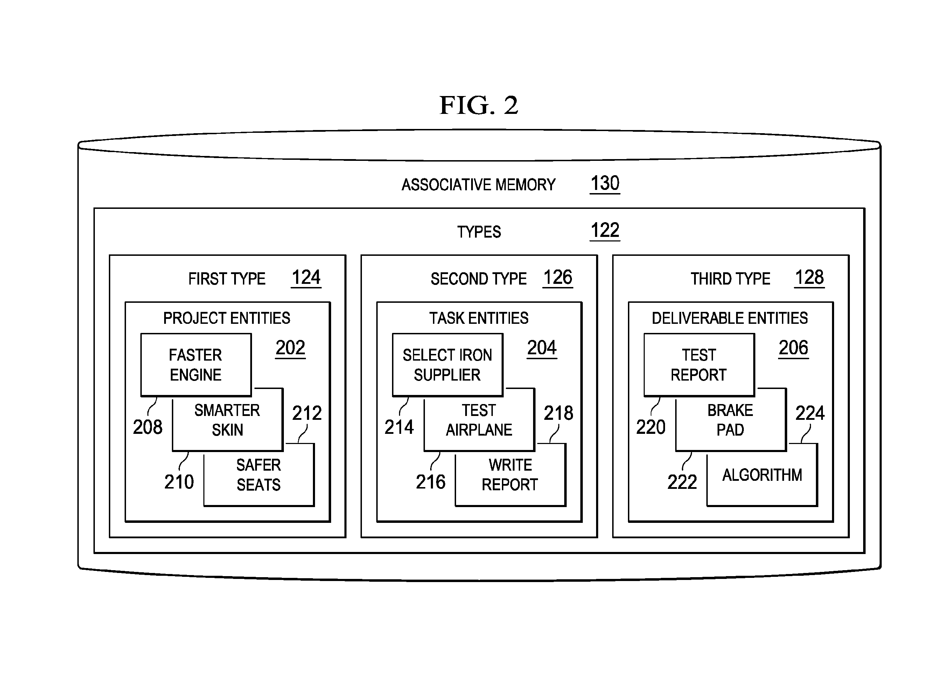

**Figure 2** is an illustration of an associative memory in the form of a block diagram depicted in accordance with an illustrative embodiment. In this illustrative example, associative memory **130** from **Figure 1** is described in greater detail.

As depicted, data entities **120** from **Figure 1** are stored in associative memory **130** based on types **122** of data entities **120.** Types **122** may include first type **124,** second type **126,** and third type **128** in this illustrative example. Of course, in other illustrative examples, types **122** may include any number of types.

First type **124** may be, for example, without limitation, project entities **202.** Second type **126** may be, for example, task entities **204.** Third type **128** may be, for example, deliverable entities **206.** Of course, in other illustrative examples, first type **124,** second type **126,** and/or third type **128** may be other suitable types of data entities.

A data entity in project entities **202** may be, for example, a particular project. A data entity in task entities **204** may be, for example, a task for the particular project. As used herein, a "task" may comprise any number of operations that may be performed to achieve a specific goal. For example, a task may be generating a report on temperature changes for a particular technology. As another example, a task may be performing an inspection. As yet another example, a task may be tightening a screw on a specific part.

Further, a data entity in deliverable entities **206** may be, for example, a deliverable produced by a particular project. As used herein, a "deliverable" may be a description of any tangible or intangible product produced as a result of a project that is intended to be delivered to a customer or client. For example, without limitation, a deliverable may be a report, a document, a software upgrade, an electronic device, a goal or outcome of a project, or some other suitable type of item.

Each of project entities **202,** task entities **204,** and deliverable entities **206** may include any number of data entities. As one illustrative example, project entities **202** in associative memory **130** may include data entity **208,** data entity **210,** and data entity **212.** Task entities **204** may include data entity **214,** data entity **216,** and data entity **218.** Deliverable entities **206** may include data entity **220,** data entity **222,** and data entity **224.**

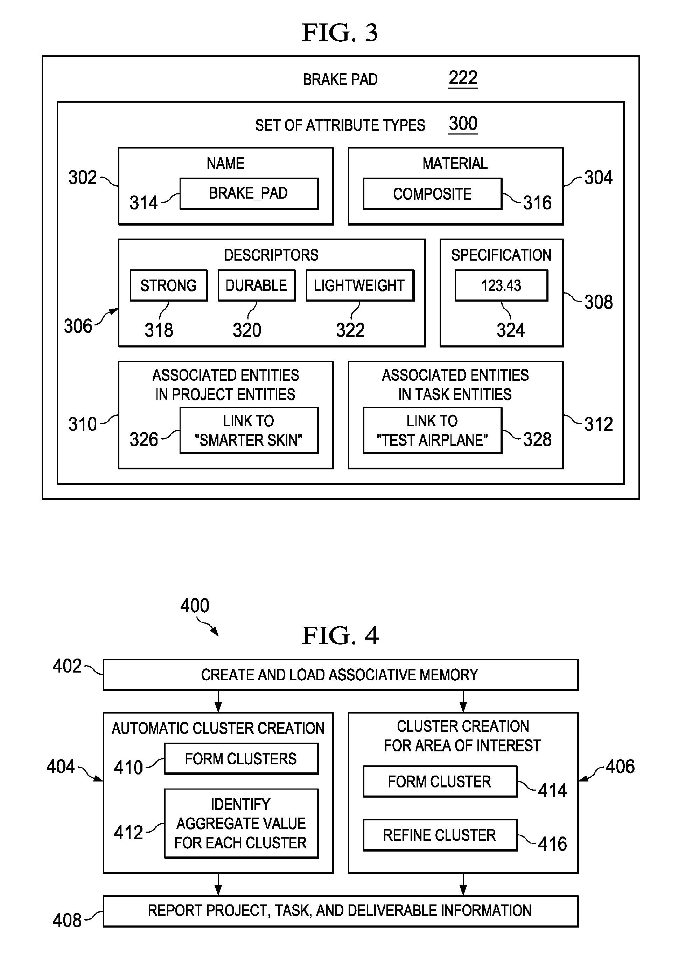

**Figure 3** is an illustration of a data entity stored in an associative memory in the form of a block diagram depicted in accordance with an illustrative embodiment. In this illustrative example, data entity **222** in deliverable entities **206** from **Figure 2** is described in greater detail.

Data entity **222** may be stored in associative memory **130** with attributes for data entity **222** organized into set of attribute types **300.** In this illustrative example, set of attribute types **300** may include name **302,** material **304,** descriptor **306,** specification **308,** associated entities in project entities **310,** and associated entities in task entities **312.**

Name **302** may be unique for data entity **222.** In other words, data entity **222** may have only one attribute for name **302** that identifies the name of data entity **222.** As depicted, attribute **314** may be the name of data entity **222.** Material **304** may be a type of material associated with data entity **222.** In other words, any attribute that is a type of material may be stored in data entity **222** as belonging to material **304.** In this illustrative example, data entity **222** has attribute **316** that belongs to material **304.** Of course, in other illustrative examples, data entity **222** may have more than one attribute belonging to material **304.**

Any attribute that describes data entity **222** may be stored as belonging to descriptor **306.** As depicted, attribute **318,** attribute **320,** and attribute **322** belong to descriptor **306.** Any attribute that identifies a particular product specification associated with data entity **222** may be stored as belonging to specification **308.** In this illustrative example, data entity **222** may have attribute **324** belonging to specification **308.**

Further, any attribute that identifies a data entity in project entities **202** from **Figure 2** that is associated with data entity **222** may belong to associated entities in project entities **310.** Similarly, any attribute that identifies a data entity in task entities **204** from **Figure 2** that is associated with data entity **222** may belong to associated entities in task entities **312.**

In this illustrative example, attributes belonging to associated entities in project entities **310** and associated entities in task entities **312** may be associated with links to the actual data entities in associative memory **130** associated with data entity **222.** For example, attribute **326** belonging to associated entities in project entities **310** may be associated with a link to data entity **212** in associative memory **130** in **Figure 2****.** Further, attribute **328** belonging to associated entities in task entities **312** may be associated with a link to data entity **216** in associative memory **130** in **Figure 2****.**

**Figure 4** is an illustration of an operational flow in the form of a block diagram depicted in accordance with an illustrative embodiment. In this illustrative example, operations **400** may be performed using project management system **104** in **Figure 1** to generate a report containing information about projects. As depicted, operations **400** may include operation **402,** operation **404,** operation **406,** and operation **408.**

In this illustrative example, operation **402** may be performed to create and load an associative memory, such as associative memory **130** in **Figure 1****.** In operation **402,** data entities, such as data entities **120** in **Figure 1****,** may be stored in the associative memory. These data entities may be of the types, for example, project entities, task entities, and deliverable entities. A user may select operation **404,** operation **406,** or a combination of the two for generating the report.

Operation **404** may be performed to automatically create clusters of data entities using the data entities stored in the associative memory and, in particular, to automatically create clusters for project, task, and deliverable information and/or information for any other type of entity. In operation **404,** operation **410** may be performed to form the clusters using the data entities stored in the associative memory. Further, operation **412** may be performed to identify an aggregate value, such as aggregate value **152** in **Figure 1****,** for each of the clusters formed. In operation **412,** clusters having aggregate values greater than some selected threshold may be selected for the report.

In addition to operation **404,** or perhaps alternatively to operation **404,** operation **406** may be performed to create a cluster of data entities related to a particular area of interest. In operation **406,** operation **414** may be performed to form the cluster using the data entities stored in the associative memory. Further, operation **416** may be performed to refine the cluster of data entities a number of times using search terms identified from the data entities in the cluster. Operation **414** and operation **416** may be performed using, for example, query generator **131** in **Figure 1****.**

In this illustrative example, operation **408** may be performed to generate a report using the clusters selected for the report in operation **404** and/or operation **406.** In particular, the report may include information about the projects, tasks, and deliverables represented in the data entities in the clusters.

In this manner, the different illustrative embodiments may use associative memory and entity analytics technology coupled with a custom user interface to enable portfolio managers to rapidly identify and group or "cluster" projects across one or more organizations that are similar. These projects may be clustered based on the matching of related and unrelated, but similar, attributes. Further, the different illustrative embodiments may benefit from the consolidation of effort and/or the sharing of knowledge and resources.

The different illustrative embodiments provide a system that may reduce the amount of time and effort needed for a portfolio manager to identify groupings or "clusters" of related or similar projects across a company or organization. Project information may include descriptions, tasks, deliverables, and/or other suitable information. The illustrative embodiments contemplate other types of project information. Project information may be maintained and tracked using a variety of applications, some off-the-shelf and some custom-built. As a result, project information may be stored in a variety of formats.

Additionally, remembering all projects, corporate-wide, may be extremely difficult for a portfolio manager because of one or more factors, including possibly the pace at which a workplace moves, the separation of project information due to fixed categorization of research and development projects, differing departmental or organizational practices, security, politics, and possibly simple ignorance. Further, these factors may make it extremely difficult for a portfolio manager to be able to recall "actionable" information with which to identify potential cost savings or greater efficiencies from shared knowledge.

Existing solutions may involve primarily manual, human analysis which may require extensive effort, including months or even years of time spent by one or more individuals or even an entire department of an organization. Calendar time can be mitigated through the use of multiple resources, such as multiple analysts or multiple portfolio managers. However, using multiple resources may negatively impact cost and efficiency.

Assuming a portfolio manager is able to remember all project tracking methods and applications across departments and organizations within a company, the process of searching for and collecting project information may remain largely a manual task involving the use of multiple applications and search tools. To complicate matters, multiple project tracking applications may mean multiple data stores which have been populated by multiple individuals who may or may not share a common vernacular when describing project information.

For example, multiple individuals may not use the same acronyms to describe a same term, may use "slang" terms, may use synonyms, or may refer to a term by an unexpected name such as a non-technical term. As a result, across a great plurality of projects, a large number of variables may stand in the way of a portfolio manager trying to collect each similar project record and then remember and derive "knowledge" or actionable information from many project records from multiple applications in multiple formats entered by multiple individuals.

Even if a company used only one project tracking application that had a uniform searching function, the project tracking application would return a grouping of projects based on the existence of whatever keyword that happens to match the keywords in the project records. The portfolio manager would still have no way of determining similarities or differences between the project records returned. The task of identifying related or similar projects and/or the degree of similarity between those projects may require that each project record must be read and the data from the project record summarized and aggregated.

Another factor may be the experience of the portfolio manager reviewing the projects. An experienced portfolio manager who has spent many years developing knowledge of tracking and managing organizations or companies may more rapidly recall and identify similarities between projects than a portfolio manager without that breadth of experience. The cost of that experience may be time, years of both successful and failed projects, money made and money lost, and the lessons learned from every decision made. In an effort to reduce the time required to accumulate the human experience that produces such knowledge, analysts have attempted to use various tools to assist in this process. Tools that human analysts use may be rule-based models, relational databases and query systems, and data mining systems.

However, existing systems may not allow for whole text capture. As a result, these systems may be limited in their ability to relate data entities, such as project entities, and their attributes, such as cost, technology, and location, in a complex and subtle manner.

Further, modern data mining solutions may be reductive, potentially losing otherwise useful information. For example, the subtleties of the data that often are important in determining desirable patterns that do not repeat often, many times may be lost. As a result, a portfolio manager may overlook a project whose description did not contain the keyword that would otherwise be flagged if present. The keyword may be, for example, an acronym. Additionally, data mining solutions may be time-consuming and costly in terms of manpower hours.

Further, with existing systems, much of the association data between entities may be lost because entities may be "forced" into being characterizing by pre-defined characteristics. For example, many database systems may have drop-down menus that allow for only certain categories to be chosen. These categories may not contain enough detail to adequately address all the associations between entities. As a result, relationships that can be of vast assistance in determining a desired result or assisting in an analytical process may be omitted.

For example, a relational database might force Project A to be described as "Spares Tracking System Development". Free text might describe the project as "java-based UI sub-application to display company information of supplier", which may provide a better indication of what the project is truly about. Project B might be described the same way by the relational database, "Spares Tracking System Development". However, the free text for Project B might be "RF Technical 12 tags".

Additionally, the relational database may force Project C to be described as "Contract Management Tasks", while the free text might be "java-based UI sub-application to display company information of contractor". The analysis of these projects may indicate that Project A and Project C are more related than Project A and Project B even though Project A and Project B are placed into the same database category.

Further, project tracking software may also contribute to categorization problems by forcing a user to categorize a project, for instance, by technology maturity. If too few categories from which to choose are present, projects may be incorrectly categorized because the user is choosing the "closest" matching category. In this case, the result may be a few categories with a large number of clustered projects, some clustered improperly.

As another example, when too many categories are defined, the result may be many categories, some possibly irrelevant, with just a few clustered projects in them, if any. Further, rule-based systems may tend to be fragile and non-reactive to changing business conditions.

The different illustrative embodiments described herein may enable a portfolio manager or user to identify projects, across an organization or company, which are the most similar or find projects that are related to an arbitrary area of interest. The different illustrative embodiments may leverage associative memory technology to rapidly evaluate large volumes of data in multiple formats to identify and group or "cluster" similar projects. Those "clustered" projects may be either related to each other or related to an area of interest.

In one illustrative embodiment, two different steps may be used. The first step may be the creation or loading of the associate memory. This first step may be implemented using operation **402** in **Figure 4** as described herein. The second step may be the analysis of the information. The second step may provide the user with two options. The first option may be to create clusters of projects based on the information in the projects. This first option may be implemented using operation **404** as described herein. The second option may be to create a cluster of projects that relate to an area of interest. This second option may be implemented using operation **406** as described herein.

In the first step, operation **402,** a specific associative memory may be created by aggregating current and historical data from project tracking applications throughout a department, organization, or company. The associative memory may remember entities, attributes for the entities, and the associations/relationships relevant to the projects described in the data sources. These entities may also be referred to as data entities. These data entities may include, for example, projects, tasks, deliverables, and/or other suitable entities.

The attributes may include, for example, description, work breakdown structure, and/or other suitable attributes. The description may be, for example, without limitation, "spares tracking" or "finance systems development". The work breakdown structure may be, for example, design security user interface, data conversion, or testing.

With the first option for the second step, operation **404,** entity analytics on the associative memory may be used to provide high value correlations between data entities to identify and create clusters of similar projects once all the information associated with the projects, the tasks, and the deliverables is remembered for a period of time. With this first option, each of the entities may be compared with every other entity, and those groups of entities that are highly correlated may be investigated to identify information, such as cost, similar technologies and/or resources, best practices, and/or duplication of effort.

As one illustrative example, a first organization within a company may require the use of a testing facility to perform acceptance testing for an aircraft component that requires specific conditions and setup procedures. A second organization in the company may develop a component that requires similar conditions for testing as the conditions used for testing the aircraft component developed by the first organization, even though the components and the projects, at first glance, appear to be unrelated. The first organization may be unaware of the testing conditions required by the second organization for testing the component developed by the second organization.

The time and resource savings that could be realized by combining the use of the testing facility may mean actual dollar reductions in the cost of producing the different components. Similarly, multiple software development teams, due to a lack of awareness of others efforts, could be buying single license copies of a development tool when purchasing an enterprise license. Purchasing multiple licenses at a time may reduce the cost of the software and the time required to install the development tool. For example, time and cost may be reduced by installing a single server package as compared to installing separate software packages. In both cases, different illustrative embodiments may provide project visibility and "actionable intelligence" that can lead to informed decisions that result in cost savings for the company.

With the second option for the second step, operation **406,** a description entity composed of a list of search terms may be developed. The description entity may be related to any particular topic or area of interest. The description entity may be iteratively refined against the associative memory to the point of maximum value. In other words, the terms in the list may identify the most number of similar, meaningfully related attributes before reaching a point of diminishing returns by generating meaningless or incorrect entity matches. Once the description entity has been created, the description entity may be used to find all projects that match the search terms.

The different illustrative embodiments may be applicable to any scale of commercial or governmental system, process, or product. However, the value of the method and apparatus for managing projects provided by the different illustrative embodiments may increase significantly as the size and complexity of the system, process, or product increases because the cluster identification process may become exponentially more difficult even as the possibility of synergies increases.

In particular, the different illustrative embodiments may provide an entity analytic cluster memory. This entity analytic cluster memory may be an associative memory that is capable of discovering highly similar research and development projects.

The different illustrative embodiments provide a method and apparatus that handles unstructured, ambiguous, free text data by breaking the text down into recognizable and comparable units, without limiting any data. Further, the different illustrative embodiment may avoid use of reductive algorithms or rules like other currently available search tools. The different illustrative embodiments may return a rank-ordered list of entities that are relevant to the terms contained in a query generated by a user.

The different illustrative embodiments provide a method and apparatus that may arrive at solutions and identify clusters more efficiently and quickly than currently available manual or automated tools. Currently available relational database manipulation tools may find keywords. However, the perspective may be that of the relational database designer, not the entity that relates to the current problem. Relational databases may not account for all the entities that reside in the free text and may fail to understand those characteristics that make projects uniquely similar and not similar because they have the same terms.

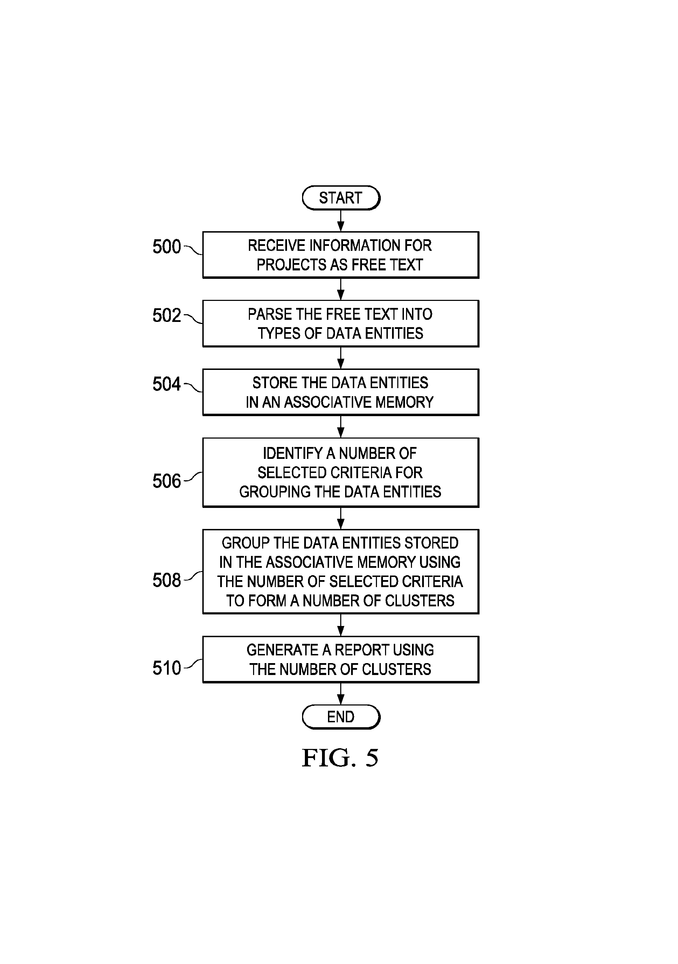

**Figure 5** is an illustration of a process for managing information for projects in the form of a flowchart depicted in accordance with an illustrative embodiment. The process illustrated in **Figure 5** may be implemented using project management system **104** in **Figure 1****.** As used herein, the term "project management system" need not be limited to project management system **104** in **Figure 1** but may also include any processor or set of processors used together with a non-transitory computer readable medium in order to effectuate the operations described herein.

Further, the process illustrated in **Figure 5** may be implemented using one or more processors, possibly in a networked or distributed environment, such as, but not limited to, processor unit **1104** of **Figure 11****.** The process illustrated in **Figure 5** may be implemented using software, hardware, or a combination thereof, but, in particular, may be used in conjunction with an associative memory.

Further, although one or more of the operations in **Figure 5** may be described as being performed by a project management system, one or more of the operations described herein may be performed by an associative memory, such as associative memory **130** in **Figure 1****.** Further, one or more of the operations may be performed by project manager **112,** project analyzer **114,** data processing system **1100** in **Figure 11****,** or by any suitable software component, hardware component, or combinations thereof.

The process may begin by the project management system receiving information for projects as free text (operation **500).** In operation **500,** a number of project tracking applications may be used to retrieve information for the projects in the form of free text. The project management system may then parse the free text into types of data entities (operation **502).** In operation **502,** the types may include, for example, a project entity, a task entity, and a deliverables entity. Although the illustrative embodiments contemplate receiving information in the form of free text, the illustrative embodiments also contemplate receiving other types of information including pictures, video, coded text, and many other forms of data.

The project management system may store the data entities in an associative memory (operation **504).** In this manner, the project management system may store the information for the projects as data entities in the associative memory.

Thereafter, the project management system may identify a number of selected criteria for grouping the data entities (operation **506).** The project management system may then group the data entities stored in the associative memory using the number of selected criteria to form a number of clusters (operation **508).** Then the project management system may generate a report using the number of clusters (operation **510),** with the process terminating thereafter.

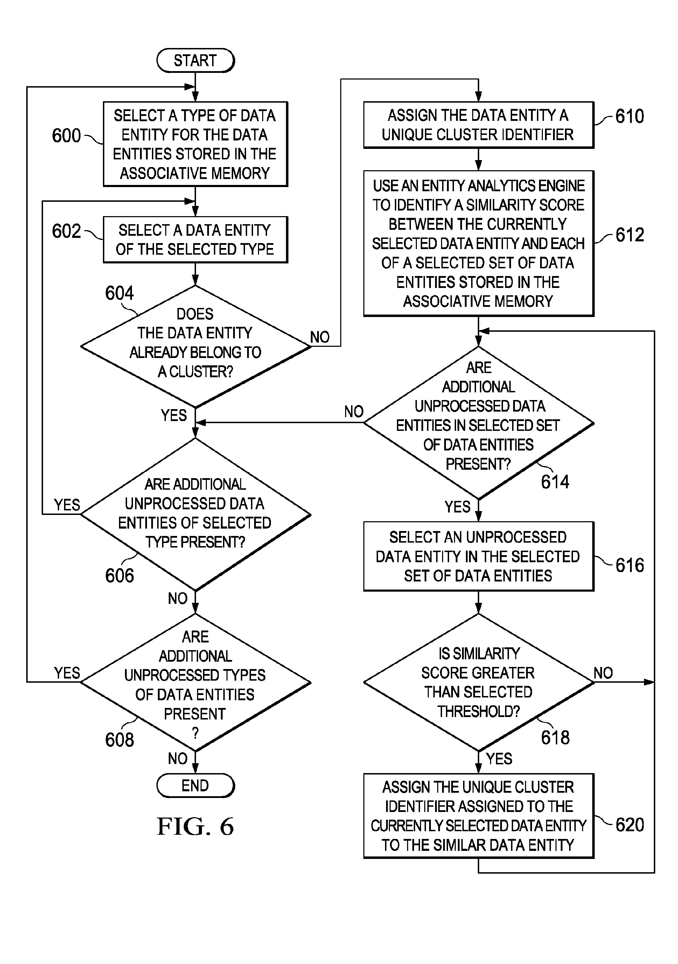

**Figure 6** is an illustration of a process for forming clusters of data entities in the form of a flowchart depicted in accordance with an illustrative embodiment. The process illustrated in **Figure 6** may be used to implement operation **508** in **Figure 5****.**

This process may be implemented using project analyzer **114** in project management system **104** in **Figure 1****.** As used herein, the term "project analyzer" need not be limited to project analyzer **114** in **Figure 1** but may also include any processor or set of processors used together with a non-transitory computer readable medium in order to effectuate the operations described herein.

Further, the process illustrated in **Figure 6** may be implemented using one or more processors, possibly in a networked or distributed environment, such as, but not limited to, processor unit **1104** of **Figure 11****.** In this manner, the process illustrated in **Figure 6** may be implemented using software, hardware, or a combination thereof, but, in particular, may be used in conjunction with an associative memory.

Further, although one or more of the operations in **Figure 6** may be described as being performed by a project analyzer, one or more of the operations described herein may be performed by an associative memory, such as associative memory **130** in **Figure 1****.** Further, in other illustrative examples, one or more of the operations may be performed by project manager **112,** data processing system **1100** in **Figure 11****,** or by any suitable software component, hardware component, or combinations thereof.

The process may begin by a project analyzer selecting a type of data entity for the data entities stored in the associative memory (operation **600).** The project analyzer then may select a data entity of the selected type (operation **602).** Next, the project analyzer may determine whether the data entity already belongs to a cluster (operation **604).**

If the data entity already belongs to a cluster, the project analyzer may determine whether any additional unprocessed data entities of the selected type are present in the associative memory (operation **606).** If additional unprocessed data entities are not present, the project analyzer may determine whether any additional unprocessed types of data entities are present in the associative memory (operation **608).**

If additional unprocessed types of data entities are not present, the process terminates. Otherwise, the process may return to operation **600** as described above. With reference again to operation **606,** if additional unprocessed data entities are present, the process may return to operation **602** as described above.

With reference again to operation **604,** if the data entity does not already belong to a cluster, the project analyzer may assign the data entity a unique cluster identifier (operation **610).** In operation **610,** the unique cluster identifier may identify the particular cluster to which the data entity will belong.

Thereafter, the project analyzer may use an entity analytics engine to identify a similarity score between the currently selected data entity and each of a selected set of data entities stored in the associative memory (operation **612).** In these illustrative examples, the selected set of data entities may include zero or more data entities identified by the entity analytics engine as being similar to the currently selected data entity. Data entities may be identified as being similar to the currently selected data entity based on the number of selected criteria identified in operation **506** in **Figure 5****.**

Of course, in other illustrative examples, the selected set of data entities may be selected in some other manner. For example, the selected set of data entities may be all the data entities of the selected type stored in the associative memory other than the currently selected data entity.

The project analyzer may then determine whether any additional unprocessed data entities are present in the selected set of data entities (operation **614).** In operation **614,** if the selected set of data entities is a null set, the project analyzer may determine that unprocessed data entities are not present in the selected set of data entities.

If unprocessed data entities are not present in the selected set of data entities, the project analyzer may proceed to operation **606** as described above. Otherwise, the project analyzer may select an unprocessed data entity in the selected set of data entities (operation **616).**

Next, the project analyzer may determine whether the similarity score between the selected unprocessed data entity and the currently selected data entity is greater than a selected threshold (operation **618).** This selected threshold may be specified by a user in these illustrative examples. If the similarity score is not greater than the selected threshold, the process may return to operation **614** as described above.

Otherwise, if the similarity score is greater than the selected threshold, the selected unprocessed data entity may be considered a similar data entity to the currently selected data entity. If the similarity score is greater than the selected threshold, the project analyzer may assign the unique cluster identifier assigned to the currently selected data entity to the similar data entity (operation **620).** In this manner, in operation **620,** the similar data entity may be added to the same cluster as the currently selected data entity. Thereafter, the process may proceed to operation **614** as described above.

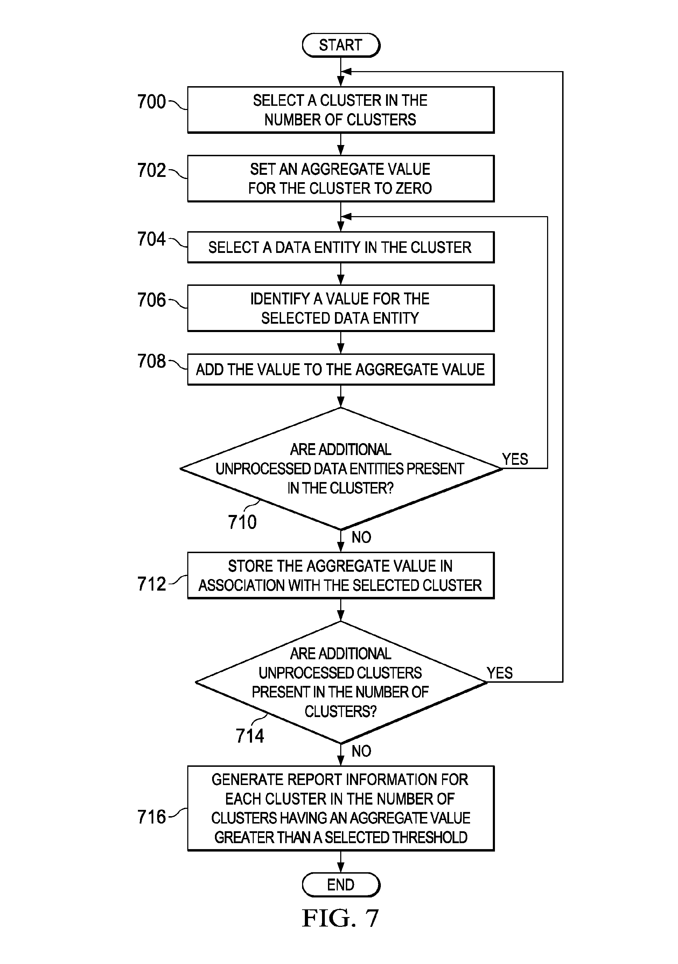

**Figure 7** is an illustration of a process for generating a report in the form of a flowchart depicted in accordance with an illustrative embodiment. The process illustrated in **Figure 7** may be used to implement operation **510** in **Figure 5****.**

This process may be implemented using project analyzer **114** in project management system **104** in **Figure 1****.** As used herein, the term "project analyzer" need not be limited to project analyzer **114** in **Figure 1** but may also include any processor or set of processors used together with a non-transitory computer readable medium in order to effectuate the operations described herein.

Further, the process illustrated in **Figure 7** may be implemented using one or more processors, possibly in a networked or distributed environment, such as, but not limited to, processor unit **1104** of **Figure 11****.** In this manner, the process illustrated in **Figure 7** may be implemented using software, hardware, or a combination thereof, but, in particular, may be used in conjunction with an associative memory.

Further, although one or more of the operations in **Figure 7** may be described as being performed by a project analyzer, one or more of the operations described below may be performed by an associative memory, such as associative memory **130** in **Figure 1****.** Further, in other illustrative examples, one or more of the operations may be performed by project manager **112,** data processing system **1100** in **Figure 11****,** or by any suitable software component, hardware component, or combinations thereof.

The process may begin by the project analyzer selecting a cluster in the number of clusters (operation **700).** In one illustrative example, the cluster may include projects that are related to a particular area of interest. The project analyzer may then set an aggregate value for the cluster to zero (operation **702).** The project analyzer may then select a data entity in the cluster (operation **704).** In one illustrative example, the data entities in this cluster may be, for example, without limitation, projects. Each of these projects may have a cost attribute. In this manner, the aggregate value for the cluster may be, for example, a total cost for the projects in the cluster.

Thereafter, the project analyzer may identify a value for the selected data entity (operation **706)** and may then add the value to the aggregate value (operation **708).** In this illustrative example, the value may be for an attribute for the selected data entity. For example, when the selected data entity is a particular project, the value may be for a cost for the particular project.

The project analyzer may determine whether any additional unprocessed data entities are present in the cluster (operation **710).** If additional unprocessed data entities are present, the process may return to operation **704** as described above.

Otherwise, the project analyzer may store the aggregate value in association with the selected cluster (operation **712).** The project analyzer then may determine whether additional unprocessed clusters are present in the number of clusters (operation **714).** If additional unprocessed clusters are present, the process may return to operation **700** as described above.

Otherwise, the project analyzer may generate report information for each cluster in the number of clusters having an aggregate value greater than a selected threshold (operation **716),** with the process terminating thereafter. The selected information may be, for example, a total cost for the projects that is high enough to warrant further attention. The report information may include, for example, without limitation, a cost of each of the projects in the cluster, a total cost for the projects in the cluster, and other suitable information.

In some cases, no clusters in the number of clusters may have an aggregate value greater than the selected threshold. In these cases, the report information may indicate that information is not available.

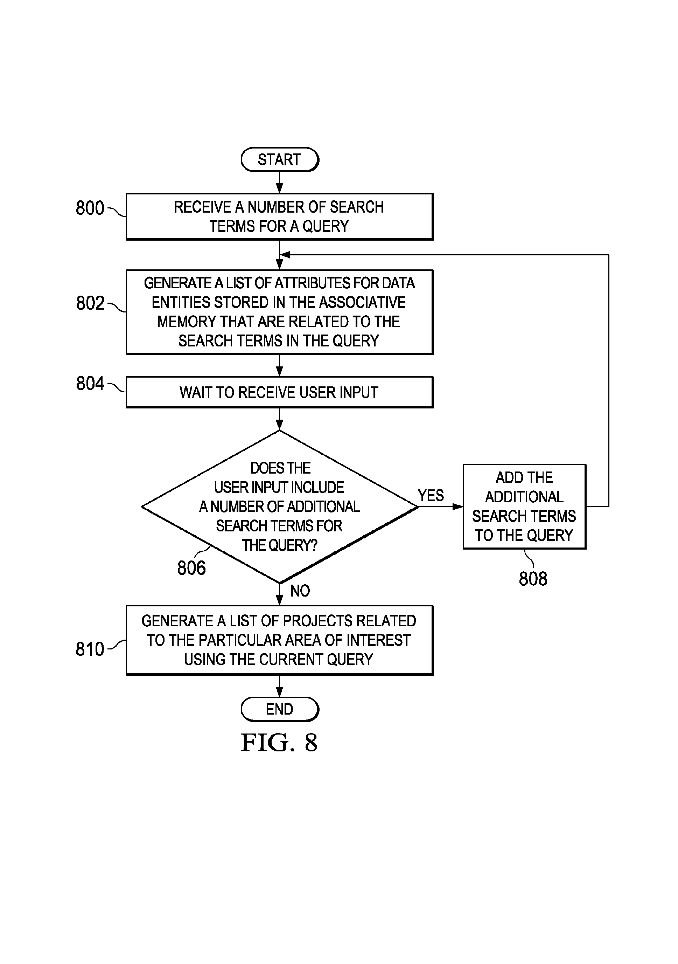

**Figure 8** is an illustration of a process for determining how much is being spent on projects related to an area of interest in the form of a flowchart depicted in accordance with an illustrative embodiment. The process illustrated in **Figure 8** may be implemented using associative memory **130** in **Figure 1****.**

Further, the process illustrated in **Figure 8** may be implemented using one or more processors, possibly in a networked or distributed environment, such as, but not limited to, processor unit **1104** of **Figure 11****.** In this manner, the process illustrated in **Figure 8** may be implemented using software, hardware, or a combination thereof, but, in particular, may be used in conjunction with an associative memory.

Further, although one or more of the operations in **Figure 8** may be described as being performed by an associative memory, one or more of the operations described below may be performed by project management system **104** in **Figure 1****.** Further, one or more of the operations may be performed by project manager **112,** project analyzer **114,** data processing system **1100** in **Figure 11****,** or by any suitable software component, hardware component, or combinations thereof.

The process may begin by the associative memory receiving a number of search terms for a query (operation **800).** In this illustrative example, the number of search terms may be received in user input entered by a user. The number of search terms may be search terms related to a particular area of interest. In other words, the query entered may be configured for identifying projects related to the particular area of interest.

The associative memory may then generate a list of attributes for data entities stored in the associative memory that are related to the search terms in the query (operation **802).** The associative memory may then wait to receive user input (operation **804).** In response to receiving user input, the associative memory may determine whether the user input includes a number of additional search terms for the query (operation **806).**

The user input may include one or more additional search terms for the query when the user determines that one or more of the attributes in the list of attributes displayed is significantly related to the area of interest. The user may use one or more of these attributes as additional search terms for the query. In this illustrative example, when the user input does not include a number of additional search terms for the query, the user input may be a command to initiate identifying projects related to the particular area of interest using the query.

If the user input includes a number of additional search terms, the project analyzer may add the additional search terms to the query (operation **808),** with the process then returning to operation **802** as described above. Otherwise, in operation **806,** if the user input does not include a number of additional search terms, the associative memory may generate a list of projects related to the particular area of interest using the current query (operation **810),** with the process terminating thereafter. In this illustrative example, the user may use the list of projects generated to identify which projects belong to a cluster corresponding to the particular area of interest.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent a module, segment, function, and/or a portion of an operation or step. For example, one or more of the blocks may be implemented as program code, in hardware, or a combination of the program code and hardware. When implemented in hardware, the hardware, for example, may take the form of integrated circuits that are manufactured or configured to perform one or more operations in the flowcharts or block diagrams.

In some alternative implementations of an illustrative embodiment, the function or functions noted in the block may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram.

For example, in some illustrative examples, the process described in **Figure 7** may be performed only for a selected group of clusters. In some illustrative examples, the process described in **Figure 6** and the process described in **Figure 7** both may be performed by a project analyzer, such as project analyzer **114** in **Figure 1****.**

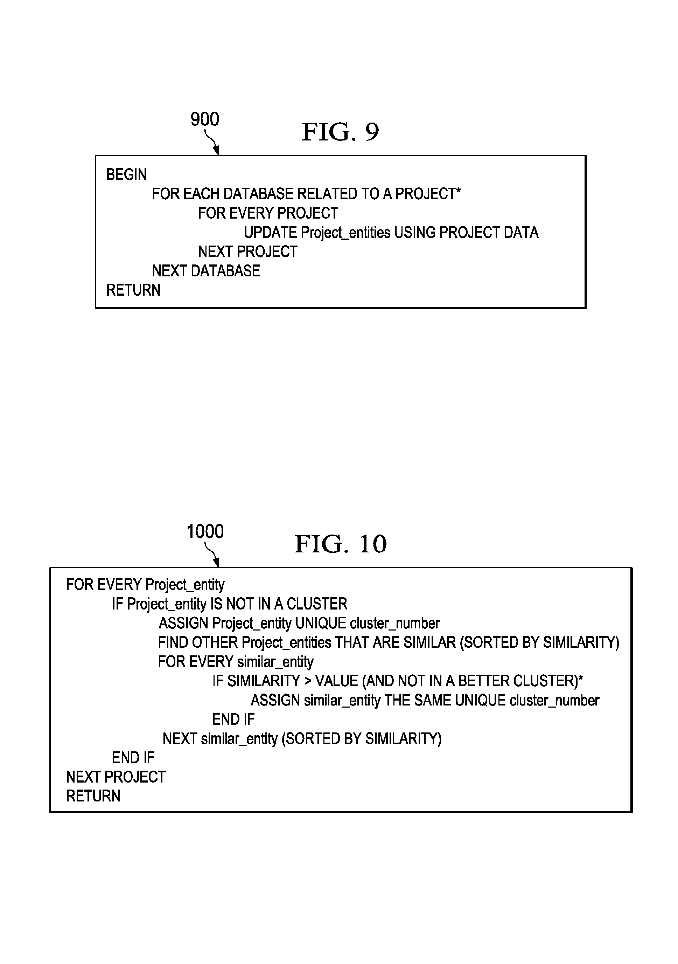

**Figure 9** is an illustration of pseudocode for creating and loading an associative memory depicted in accordance with an illustrative embodiment. Pseudocode **900** may be used to create and load an associative memory, such as, for example, without limitation, associative memory **130** in **Figure 1****.** In some cases, pseudocode **900** may be used to implement operation **402** in **Figure 4****.**

**Figure 10** is an illustration of pseudocode for forming clusters depicted in accordance with an illustrative embodiment. Pseudocode **1000** may be used to form clusters, such as number of clusters **134** in **Figure 1****.** In some cases, pseudocode **1000** may be used to implement operation **410** and/or operation **414** in **Figure 4****.**

**Figure 11** is an illustration of a data processing system depicted in accordance with an illustrative embodiment. In this illustrative example, data processing system **1100** may be used to implement one or more computers in computer system **110** in **Figure 1** and/or project management system **104** in **Figure 1****.** Data processing system **1100** includes communications fabric **1102,** which provides communications between processor unit **1104,** memory **1106,** persistent storage **1108,** communications unit **1110,** input/output (I/O) unit **1112,** display **1114,** and associative memory **1115.** In these illustrative examples, associative memory may be implemented using associative memory **1115.**

Processor unit **1104** serves to execute instructions for software that may be loaded into memory **1106.** Processor unit **1104** may be a number of processors, a multi-processor core, or some other type of processor, depending on the particular implementation. "A number", as used herein with reference to an item, may mean one or more items. Further, processor unit **1104** may be implemented using a number of heterogeneous processor systems in which a main processor is present with secondary processors on a single chip. As another illustrative example, processor unit **1104** may be a symmetric multi-processor system containing multiple processors of the same type.

Memory **1106** and persistent storage **1108** are examples of storage devices **1116.** A storage device is any piece of hardware that is capable of storing information, such as, for example, without limitation, data, program code in functional form, and other types of suitable information either on a temporary basis or a permanent basis. Storage devices **1116** may also be referred to as computer readable storage devices in these examples. Memory **1106,** in these examples, may be, for example, a random access memory or any other suitable volatile or non-volatile storage device. Persistent storage **1108** may take various forms, depending on the particular implementation.

For example, persistent storage **1108** may contain one or more components or devices. For example, persistent storage **1108** may be a hard drive, a flash memory, a rewritable optical disk, a rewritable magnetic tape, or some combination of the above. The media used by persistent storage **1108** also may be removable. For example, a removable hard drive may be used for persistent storage **1108.**

Communications unit **1110,** in these examples, provides for communications with other data processing systems or devices. In these examples, communications unit **1110** is a network interface card. Communications unit **1110** may provide communications through the use of either or both physical and wireless communications links.

Input/output unit **1112** allows for input and output of data with other devices that may be connected to data processing system **1100.** For example, input/output unit **1112** may provide a connection for user input through a keyboard, a mouse, and/or some other suitable input device. Further, input/output unit **1112** may send output to a printer. Display **1114** provides a mechanism to display information to a user.

Instructions for the operating system, applications, and/or programs may be located in storage devices **1116,** which are in communication with processor unit **1104** through communications fabric **1102.** In these illustrative examples, the instructions are in a functional form on persistent storage **1108.** These instructions may be loaded into memory **1106** for execution by processor unit **1104.** The processes of the different embodiments may be performed by processor unit **1104** using computer-implemented instructions, which may be located in a memory, such as memory **1106.**

These instructions are referred to as program code, computer usable program code, or computer readable program code that may be read and executed by a processor in processor unit **1104.** The program code in the different embodiments may be embodied on different physical or computer readable storage media, such as memory **1106** or persistent storage **1108.**

Program code **1118** is located in a functional form on computer readable media **1120** that is selectively removable and may be loaded onto or transferred to data processing system **1100** for execution by processor unit **1104.** Program code **1118** and computer readable media **1120** form computer program product **1122** in these examples. In one example, computer readable media **1120** may be computer readable storage media **1124** or computer readable signal media **1126.** Computer readable storage media **1124** may include, for example, an optical or magnetic disk that is inserted or placed into a drive or other device that is part of persistent storage **1108** for transfer onto a storage device, such as a hard drive, that is part of persistent storage **1108.**

Computer readable storage media **1124** also may take the form of a persistent storage, such as a hard drive, a thumb drive, or a flash memory, that is connected to data processing system **1100.** In some instances, computer readable storage media **1124** may not be removable from data processing system **1100.** In these examples, computer readable storage media **1124** is a physical or tangible storage device used to store program code **1118** rather than a medium that propagates or transmits program code **1118.** Computer readable storage media **1124** is also referred to as a computer readable tangible storage device or a computer readable physical storage device. In other words, computer readable storage media **1124** is a media that can be touched by a person.

Alternatively, program code **1118** may be transferred to data processing system **1100** using computer readable signal media **1126.** Computer readable signal media **1126** may be, for example, a propagated data signal containing program code **1118.** For example, computer readable signal media **1126** may be an electromagnetic signal, an optical signal, and/or any other suitable type of signal. These signals may be transmitted over communications links, such as wireless communications links, optical fiber cable, coaxial cable, a wire, and/or any other suitable type of communications link. In other words, the communications link and/or the connection may be physical or wireless in the illustrative examples.

In some illustrative embodiments, program code **1118** may be downloaded over a network to persistent storage **1108** from another device or data processing system through computer readable signal media **1126** for use within data processing system **1100.** For instance, program code stored in a computer readable storage medium in a server data processing system may be downloaded over a network from the server to data processing system **1100.** The data processing system providing program code **1118** may be a server computer, a client computer, or some other device capable of storing and transmitting program code **1118.**

The different components illustrated for data processing system **1100** are not meant to provide physical or architectural limitations to the manner in which different embodiments may be implemented. The different illustrative embodiments may be implemented in a data processing system including components in addition to and/or in place of those illustrated for data processing system **1100.** Other components shown in **Figure 11** can be varied from the illustrative examples shown. The different embodiments may be implemented using any hardware device or system capable of running program code. As one example, the data processing system may include organic components integrated with inorganic components and/or may be comprised entirely of organic components excluding a human being. For example, a storage device may be comprised of an organic semiconductor.

In another illustrative example, processor unit **1104** may take the form of a hardware unit that has circuits that are manufactured or configured for a particular use. This type of hardware may perform operations without needing program code to be loaded into a memory from a storage device to be configured to perform the operations.

For example, when processor unit **1104** takes the form of a hardware unit, processor unit **1104** may be a circuit system, an application specific integrated circuit (ASIC), a programmable logic device, or some other suitable type of hardware configured to perform a number of operations. With a programmable logic device, the device is configured to perform the number of operations. The device may be reconfigured at a later time or may be permanently configured to perform the number of operations. Examples of programmable logic devices include, for example, a programmable logic array, a programmable array logic, a field programmable logic array, a field programmable gate array, and other suitable hardware devices. With this type of implementation, program code **1118** may be omitted, because the processes for the different embodiments are implemented in a hardware unit.

In still another illustrative example, processor unit **1104** may be implemented using a combination of processors found in computers and hardware units. Processor unit **1104** may have a number of hardware units and a number of processors that are configured to run program code **1118.** With this depicted example, some of the processes may be implemented in the number of hardware units, while other processes may be implemented in the number of processors.

In another example, a bus system may be used to implement communications fabric **1102** and may be comprised of one or more buses, such as a system bus or an input/output bus. Of course, the bus system may be implemented using any suitable type of architecture that provides for a transfer of data between different components or devices attached to the bus system.

Additionally, a communications unit may include a number of devices that transmit data, receive data, or transmit and receive data. A communications unit may be, for example, a modernm or a network adapter, two network adapters, or some combination thereof. Further, a memory may be, for example, memory **1106,** or a cache, such as found in an interface and memory controller hub that may be present in communications fabric **1102.**

Below are aspects, variants, instances, and examples of illustrations disclosed in the text and the figures above. In one aspect, a method is disclosed for managing information for projects, the method including: storing the information for the projects as data entities in an associative memory; wherein the associative memory includes a plurality of data having a plurality of associations in which the data entities are included in the plurality of data; wherein the associative memory further includes a content-addressable structure; and wherein the associative memory is configured to be queried based on at least one relationship selected from a group that includes direct relationships and indirect relationships among the plurality of data; grouping the data entities stored in the associative memory to form a number of clusters; and generating a report using the number of clusters.

In one variant, the method further includes: identifying a number of selected criteria for grouping a portion of the data entities stored in the associative memory that are related to an area of interest into a cluster in the number of clusters. In another variant, the method further includes wherein grouping the data entities stored in the associative memory to form the number of clusters includes: identifying a number of data entities related to the area of interest from the data entities stored in the associative memory using the number of selected criteria. In yet another variant, the method further includes: identifying a set of new criteria based on the number of data entities identified; and adding the set of new criteria to the number of selected criteria to form modified criteria for grouping the portion of the data entities stored in the associative memory that are related to the area of interest into the cluster in the number of clusters.

In one instance, the method optionally includes wherein grouping the data entities stored in the associative memory to form the number of clusters includes:
determining whether a data entity in the data entities stored in the associative memory belongs to a cluster in the number of clusters; and adding the data entity in the data entities to the cluster when a determination is made that the data entity belongs to the cluster. In one instance,
the method optionally includes wherein determining whether the data entity in the data entities stored in the associative memory belongs to the cluster in the number of clusters includes:
   comparing the data entity with a number of data entities already present in the cluster to form a similarity score using an entity analytics engine and a number of attributes associated with the data entity; and
   determining whether the similarity score is greater than a selected threshold.

In one example, the method optionally includes wherein adding the data entity in the data entities to the cluster when the determination is made that the data entity belongs to the cluster includes: adding the data entity to the cluster when the similarity score is greater than the selected threshold. In another example, the method optionally includes wherein storing the information for the projects as the data entities in the associative memory includes: receiving the information for the projects as free text; parsing the free text into a first type, a second type, and a third type of the data entities; and storing the data entities in the associative memory. In yet another example, the method optionally includes wherein the first type is a project entity, the second type is a task entity, and the third type is a deliverables entity.

In one variant, the method further includes: receiving a number of selected criteria in the form of a query entered by a user, wherein the number of selected criteria includes a number of search terms for grouping a portion of the data entities stored in the associative memory that are related to an area of interest into a cluster in the number of clusters. In another variant, the method includes wherein generating the report using the number of clusters comprises: calculating an aggregate value for each cluster in the number of clusters; adding any cluster in the number of clusters having the aggregate value greater than a selected threshold to a set of clusters selected for generating the report; and generating the report using the data entities in the set of clusters.

In yet another variant, the method includes wherein the aggregate value for a cluster in the number of clusters is a sum of values for attributes of a particular attribute type shared by a number of data entities in the cluster. In still another variant, the method includes wherein the particular attribute type is selected from one of cost, an offset credit, government matching funds, a number of people on a project, a number of tasks for the project, a project deadline, a number of devices of a particular type being used in the project, a type of material, and an identification number.

In one aspect, an apparatus is disclosed for managing information for projects, the apparatus including: a project manager configured to store the information for the projects as data entities in an associative memory; wherein the associative memory includes a plurality of data having a plurality of associations in which the data entities are included in the plurality of data; wherein the associative memory further includes a content-addressable structure; and wherein the associative memory is configured to be queried based on at least one relationship selected from a group that includes direct relationships and indirect relationships among the plurality of data; and a project analyzer configured to group the data entities stored in the associative memory to form a number of clusters and generate a report using the number of clusters. In one variant, the apparatus further includes: a graphical user interface configured for display on a display system, wherein the graphical user interface is configured to receive user input identifying a number of selected criteria for grouping a portion of the data entities stored in the associative memory that are related to an area of interest into a cluster in the number of clusters.

In one instance, the apparatus optionally includes wherein the project analyzer is further configured to group the data entities stored in the associative memory to form the number of clusters by: identifying a number of data entities related to the area of interest from the data entities stored in the associative memory using the number of selected criteria; identifying a set of new criteria based on the number of data entities identified; and adding the set of new criteria to the number of selected criteria to form modified criteria for grouping the portion of the data entities stored in the associative memory that are related to the area of interest into the cluster in the number of clusters. In one example, the apparatus optionally includes wherein the project analyzer is further configured to group the data entities stored in the associative memory to form the number of clusters by determining whether a data entity in the data entities stored in the associative memory belongs to a cluster in the number of clusters; and adding the data entity in the data entities to the cluster when a determination is made that the data entity belongs to the cluster.

In another example, the apparatus optionally includes wherein the project analyzer is further configured to determine whether the data entity in the data entities stored in the associative memory belongs to the cluster in the number of clusters by comparing the data entity with a number of data entities already present in the cluster to form a similarity score using an entity analytics engine and a number of attributes associated with the data entity; and determining whether the similarity score is greater than a selected threshold. In yet another example, the apparatus optionally includes wherein the project analyzer is further configured to add the data entity in the data entities to the cluster by adding the data entity to the cluster when the similarity score is greater than the selected threshold.

In one aspect, a computer system is disclosed including: a bus; a non-transitory storage device connected to the bus, wherein the non-transitory storage device includes program code; and a processor unit connected to the bus, wherein the processor unit is configured to execute the program code to: store information for projects as data entities in an associative memory; wherein the associative memory includes a plurality of data having a plurality of associations in which the data entities are included in the plurality of data; wherein the associative memory further includes a content-addressable structure; and wherein the associative memory is configured to be queried based on at least one relationship selected from a group that includes direct relationships and indirect relationships among the plurality of data; group the data entities stored in the associative memory to form a number of clusters; and generate a report using the number of clusters.

Thus, the different illustrative embodiments provide a method and apparatus for managing information for projects. In particular, the different illustrative embodiments provide a method and apparatus for managing information for projects stored in an associative memory.

In one illustrative embodiment, a method is provided for managing information for projects. The information for the projects may be stored as data entities in an associative memory. The associative memory may include a plurality of data having a plurality of associations in which the data entities are included in the plurality of data. Further, the associative memory may include a content-addressable structure. The associative memory may be configured to be queried based on at least one relationship selected from a group that includes direct relationships and indirect relationships among the plurality of data. The data entities stored in the associative memory may be grouped using a number of selected criteria to form a number of clusters. A report may be generated using the number of clusters.

The description of the different illustrative embodiments has been presented for purposes of illustration and description and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method for managing information (116) for projects (106), the method comprising:
storing the information (116) for the projects (106) as data entities (120) in an associative memory (130);
wherein the associative memory (130) includes a plurality of data having a plurality of associations in which the data entities (120) are included in the plurality of data;
wherein the associative memory (130) further includes a content-addressable structure; and
wherein the associative memory (130) is configured to be queried based on at least one relationship selected from a group that includes direct relationships and indirect relationships among the plurality of data;
grouping the data entities (120) stored in the associative memory to form a number of clusters (134); and
generating a report using the number of clusters (134).

2. The method of claim 1 further comprising:
identifying a number of selected criteria (132) for grouping a portion of the data entities (120) stored in the associative memory (130) that are related to an area (129) of interest into a cluster in the number of clusters (134);
wherein grouping the data entities (120) stored in the associative memory (130) to form the number of clusters (134) comprises:
identifying a number of data entities (144) related to the area of interest (129) from the data entities (120) stored in the associative memory (130) using the number of selected criteria (132);
identifying a set of new criteria (146) based on the number of data entities (144) identified; and
adding the set of new criteria (146) to the number of selected criteria (132) to form modified criteria (147) for grouping the portion of the data entities (120) stored in the associative memory (130) that are related to the area of interest (129) into the cluster in the number of clusters (134).

3. The method of claim 1, wherein grouping the data entities (120) stored in the associative memory (130) to form the number of clusters (134) comprises:
determining whether a data entity in the data entities (120) stored in the associative memory (130) belongs to a cluster in the number of clusters (134) comprises:
comparing the data entity with a number of data entities (144) already present in the cluster to form a similarity score (142) using an entity analytics engine (136) and a number of attributes associated with the data entity; and
determining whether the similarity score (142) is greater than a selected threshold; and
adding the data entity in the data entities (120) to the cluster when a determination is made that the data entity belongs to the cluster comprises:
adding the data entity to the cluster when the similarity score (142) is greater than the selected threshold.

4. The method of claim 1, wherein storing the information (116) for the projects (106) as the data entities (120) in the associative memory (130) comprises:
receiving the information (116) for the projects (106) as free text;
parsing the free text into a first type (124), a second type (126), and a third type (128) of the data entities (120); and
storing the data entities (120) in the associative memory (130);
wherein the first type (124) is a project entity, the second type (126) is a task entity, and the third type (128) is a deliverables entity.

5. The method of claim 1 further comprising:
receiving a number of selected criteria (132) in the form of a query entered by a user, wherein the number of selected criteria (132) comprises a number of search terms for grouping a portion of the data entities (120) stored in the associative memory (130) that are related to an area of interest (129) into a cluster in the number of clusters (134);
wherein generating the report using the number of clusters (134) comprises:
calculating an aggregate value (152) for each cluster in the number of clusters (134);
adding any cluster in the number of clusters (134) having the aggregate value (152) greater than a selected threshold to a set of clusters selected for generating the report; and
generating the report using the data entities (120) in the set of clusters; wherein the aggregate value (152) for a cluster in the number of clusters (134) is a sum of values for attributes of a particular attribute type shared by a number of data entities (144) in the cluster.

6. An apparatus for managing information (116) for projects (106), the apparatus comprising:
a project manager (112) configured to store the information (116) for the projects (106) as data entities in an associative memory (130);
wherein the associative memory (130) includes a plurality of data having a plurality of associations in which the data entities (120) are included in the plurality of data;
wherein the associative memory (130) further includes a content-addressable structure; and
wherein the associative memory (130) is configured to be queried based on at least one relationship selected from a group that includes direct relationships and indirect relationships among the plurality of data; and
a project analyzer (114) configured to group the data entities (120) stored in the associative memory (130) to form a number of clusters (134) and generate a report using the number of clusters (134).

7. The apparatus of claim 6 further comprising:
a graphical user interface configured for display on a display system, wherein the graphical user interface is configured to receive user input identifying a number of selected criteria (132) for grouping a portion of the data entities (120) stored in the associative memory (130) that are related to an area of interest (129) into a cluster in the number of clusters (134).

8. The apparatus of any of claim 6 or 7, wherein the project analyzer (114) is further configured to group the data entities (120) stored in the associative memory (130) to form the number of clusters (134) by:
identifying a number of data entities (144) related to the area of interest (129) from the data entities (120) stored in the associative memory (130) using the number of selected criteria (132);
identifying a set of new criteria (146) based on the number of data entities (144) identified; and
adding the set of new criteria (146) to the number of selected criteria (132) to form modified criteria (147) for grouping the portion of the data entities (120) stored in the associative memory (130) that are related to the area of interest into the cluster in the number of clusters (134).

9. The apparatus of claim 8, wherein the project analyzer (114) is further configured to group the data entities (120) stored in the associative memory (130) to form the number of clusters (134) by determining whether a data entity in the data entities (120) stored in the associative memory belongs to a cluster in the number of clusters (134); and adding the data entity in the data entities (120) to the cluster when a determination is made that the data entity belongs to the cluster.

10. The apparatus of any of claims 7-9, wherein the project analyzer (114) is further configured to determine whether the data entity in the data entities (120) stored in the associative memory belongs to the cluster in the number of clusters (134) by comparing the data entity with a number of data entities (144) already present in the cluster to form a similarity score (142) using an entity analytics engine (136) and a number of attributes associated with the data entity; and determining whether the similarity score (142) is greater than a selected threshold; and wherein the project analyzer (114) is further configured to add the data entity in the data entities (120) to the cluster by adding the data entity to the cluster when the similarity score (142) is greater than the selected threshold.
